# EUROPÄISCHE PATENTSCHRIFT

(11) **EP 3 042 106 B1**
(45) Veröffentlichungstag und Bekanntmachung des Hinweises auf die Patenterteilung: **26.05.2021**
(21) Anmeldenummer: 14766400.7
(22) Anmeldetag: 05.09.2014
(51) Int. Cl.: F16H 61/04, F16H 59/46

(54) **VERFAHREN ZUM BETRIEB EINES SCHALTGETRIEBES SOWIE SCHALTGETRIEBE MIT WENIGSTENS ZWEI SCHALTEINRICHTUNGEN**
METHOD FOR OPERATING A TRANSMISSION AND TRANSMISSION HAVING AT LEAST TWO SHIFTING DEVICES
PROCÉDÉ PERMETTANT DE FAIRE FONCTIONNER UNE BOÎTE DE VITESSES ET BOÎTE DE VITESSES COMPRENANT AU MOINS DEUX DISPOSITIFS DE COMMANDE

(30) Priorität: 05.09.2013 AT 505522013
(43) Veröffentlichungstag der Anmeldung: 13.07.2016
(73) Patentinhaber: AVL List GmbH, 8020 Graz (AT)
(72) Erfinder: LICHTENEGGER, Stefan, A-8511 St. Stefan ob Stainz (AT); YOLGA, Muammer, A-8020 Graz (AT)
(74) Vertreter: Paustian & Partner Patentanwälte mbB
(86) Internationale Anmeldenummer: PCT/EP2014/002412
(87) Internationale Veröffentlichungsnummer: WO 2015/032507

(56) Entgegenhaltungen:
- WO-A1-2010/095523
- DE-A1- 4 334 172
- DE-A1- 4 424 456
- US-A1- 2012 247 911

## Beschreibung

Die vorliegende Erfindung betrifft ein Verfahren zum Betrieb, insbesondere zum Schalten, eines Schaltgetriebes mit wenigstens zwei Schalteinrichtungen, insbesondere für Kraftfahrzeuge. Weiters betrifft die vorliegende Erfindung ein Schaltgetriebe mit wenigstens zwei Schalteinrichtungen sowie ein Kraftfahrzeug und einen Antriebstrang mit einem solchen Schaltgetriebe.

Die Erfindung wird in Bezug auf den Einsatz in straßenbasierten Kraftfahrzeugen mit hybrider Antriebsstruktur beschrieben, in denen, insbesondere zur Zusammenführung von Drehmoment aus wenigstens zwei Antriebsquellen, vielfach Schaltgetriebe mit wenigstens zwei Eingangswellen und wenigstens einer Ausgangswelle zum Einsatz kommen. Es wird jedoch darauf hingewiesen, dass die/das erfindungsgemäße Vorrichtung/Verfahren auch für beliebige andere Anwendungen, insbesondere im Bereich schienen- oder wassergebundener Kraftfahrzeuge oder bei stationären Anwendungen, insbesondere im Bereich von Kraftwerken und/oder Gebäuden, verwendet werden kann.

Schaltabläufe mit wenigstens zwei, insbesondere wenigstens drei, beteiligten Schalteinrichtungen erfordern in der Regel eine Abstimmung der Schaltvorgänge der einzelnen Schalteinrichtungen aufeinander. Im Stand der Technik werden dazu vielfach Lösungen vorgeschlagen, bei denen mittels einer vorbestimmten, zeitlich veränderlichen, Druckbeaufschlagung eines Schaltstellers beispielsweise die Übergabe eines zu übertragenden Drehmoments von einer auf eine andere Schalteinrichtung beeinflusst werden soll. Ein derartiger Lösungsansatz ist beispielsweise aus der deutschen Patentanmeldung DE 44 24 456 A1 bekannt.

Bei Schaltabläufen mit drei beteiligten Schalteinrichtungen kann es bei an sich bekannter, insbesondere sequenzieller, Betätigung in Abhängigkeit von der Getriebekinematik zu einem unerwünschten Betriebsverhalten von zumindest einer der Schalteinrichtungen des Schaltgetriebes kommen: Eine unter Schlupf schließende Schalteinrichtung überträgt während der Synchronisationsphase ein dynamisches Drehmoment in eine Wirkrichtung, welches beim Fassen desselben - in dem Moment, in dem die Drehzahldifferenz zwischen der Eingangsseite der Schalteinrichtung und der Ausgangsseite der Schalteinrichtung (Schlupfwert) gleich Null wird - schlagartig die Wirkrichtung ändert. Infolgedessen kann es zum so genannten Stick-Slip-Effekt in dieser Schalteinrichtung kommen, was sich in unerwünschter Art und Weise auf die Schaltqualität auswirkt. Des Weiteren können unerwünschte Auswirkungen auf andere Getriebekomponenten auftreten, insbesondere starke Last- und Anlagewechsel an Zahnflanken von Zahnrädern, Drehmomentspitzen oder Drehmomentstöße.

Die US-Patentanmeldung US 2012/0247911 A1 betrifft eine Hybridantriebsvorrichtung mit einem Elektromotor, einem Automatikgetriebe, einem ersten Ölkanal und einen zweiten Ölkanal, welcher von dem ersten Ölkanal abzweigt und das Öl zu einem Reibungselement führt, welches zum Herstellen eines Gangs in dem automatischen Getriebe in Eingriff ist. In dem ersten Ölkanal ist stromabwärts von dem zweiten Ölkanal eine Öffnung wird vorgesehen. In dem zweiten Ölkanal ist eine ein Schaltventil für das Reibungselement vorgesehen, die zwischen kommunizierendem Zustand und Sperrzustand umschaltet. Ein hydraulischer Servomotor für das Reibungselement ist mit einem Hydraulikdruck versorgt, um das Reibelement zwischen den Zuständen in Eingriff, gelöst und Schlupf zu steuern. Das Schaltventil weist eine Steuerölkammer auf, welche mit dem hydraulischen Servomotor in Verbindung steht, und wird in den Sperrzustand geschaltet, wenn das Reibelement ausgerückt ist, und in den kommunizierenden Zustand, wenn das Reibelement in den Zuständen in Eingriff oder Schlupf ist.

Die deutsche Patentanmeldung DE 4334172 A1 betrifft ein Verfahren zur Steuerung und Regelung des Hochschaltvorganges in einem automatischen Getriebe, vorzugsweise in einem Kraftfahrzeuggetriebe, welches ein in einem Getriebegehäuse angeordneten Planetengetriebesatz aufweist, über eine Getriebeeingangs- und eine Getriebeausgangswelle sowie über elektrohydraulische Ventile zur Betätigung von Getriebeschaltgliedern wie Kupplungen und Bremsen verfügt, das mit einem Steuerungs- und Regelungscomputer für das Ge-triebe verbunden ist, der über Mess- und Steuerleitungen mit den elektrohydraulischen Ventilen, mit Sensoren für die Motordrehzahl, für die Drehzahlen von Ringrad und/oder Sonnenrad des Planetengetriebes sowie mit Sensoren für die Fahrgeschwindigkeit, den Drosselklappenwinkel oder die Fahrpedalstellung und für die Stellung des Getriebewahlschalthebels in Verbindung steht, bei dem zur Durchführung eines Hochschaltvorganges der Computer die elektrohydraulischen Ventile der an der Schaltung beteiligten Schaltglieder derart ansteuert, dass der Schaltdruck des wegzuschaltenden Schaltgliedes abgesenkt wird und der Schaltdruck des zuzuschaltenden Schaltgliedes angehoben wird, wobei zu Beginn eines Hochschaltvorganges der Schaltdruck und damit die Momentenübertragungskapazität des wegzuschaltenden Schaltgliedes bis an dessen Rutschgrenze ab- gesenkt wird.

Eine Aufgabe der vorliegenden Erfindung ist es nun, ein verbessertes Verfahren zum Schalten eines Schaltgetriebes bzw. ein verbessertes Schaltgetriebe mit wenigstens zwei Schalteinrichtungen zur Verfügung zu stellen.

Zur Lösung der Aufgabe wird ein Verfahren mit den Merkmalen des unabhängigen Anspruchs 1 vorgeschlagen sowie ein Schaltgetriebe mit den Merkmalen des Anspruchs 5.

Eine Antriebssteuerung mit einem solchen Schaltgetriebe wird in Anspruch 10 unter Schutz gestellt, ein Kraftfahrzeug in Anspruch 12, sowie ein Computerprogramm in Anspruch 13 und ein Computer-lesbares Medium in Anspruch 14.

Gemäß einem Aspekt der Erfindung wird ein Verfahren zum Betrieb, insbesondere zum Schalten, eines Schaltgetriebes, insbesondere für Kraftfahrzeuge, das wenigstens zwei, insbesondere wenigstens drei oder vier oder eine Mehrzahl, reibschlüssige Schalteinrichtungen mit jeweils einer Eingangsseite und einer Ausgangsseite aufweist, vorgeschlagen.

Anhand einer Differenz einer Drehzahl der Eingangsseite und einer Drehzahl der Ausgangsseite zueinander ist, insbesondere separat für jede Schalteinrichtung, ein Schlupfwert definierbar.

Jede dieser Schalteinrichtungen weist wenigstens einen Lastschaltzustand auf, in welchem die Eingangsseite und die Ausgangsseite miteinander zur Drehmomentübertragung verbunden sind. Jede dieser Schalteinrichtungen weist einen Leerlaufschaltzustand auf, in welchem die Eingangsseite und die Ausgangsseite im Wesentlichen nicht miteinander verbunden sind.

Bei dem Verfahren wird eine erste von diesen Schalteinrichtungen aus ihrem Lastschaltzustand in ihren Leerlaufschaltzustand oder umgekehrt geschaltet. Eine zweite von diesen Schalteinrichtungen wird in Abhängigkeit von ihrem Schlupfwert erst dann aus ihrem Leerlaufschaltzustand in ihren Lastschaltzustand oder umgekehrt geschaltet, wenn dieser Schlupfwert nach einem Nulldurchgang, insbesondere im Sinne einer Schlupfumkehr, ein anderes Vorzeichen aufweist als zwischen dem Schalten der ersten Schalteinrichtung und dem Nulldurchgang, insbesondere im Wesentlichen unmittelbar nach dem Schalten, vorzugsweise nach der Schaltbewegung von Reibpartnern der Eingangs- und/oder Ausgangsseite, der ersten Schalteinrichtung.

Dadurch kann in einer bevorzugten Ausführung ein unerwünschtes Betriebsverhalten zumindest eines der Schaltelemente, insbesondere des zweiten Schaltelements, reduziert oder vermieden werden. Insbesondere kann eine Änderung der Wirkrichtung des Drehmoments an wenigstens einem, insbesondere dem zweiten, Schaltelement reduziert oder vermieden werden.

Mit der Änderung der Wirkrichtung des Drehmoments oder unabhängig davon kann durch die Anwendung eines solchen Verfahrens das Auftreten eines Stick-Slip-Effekts in diesem Schaltelement bzw. diesen Schaltelementen reduziert oder vermieden werden, was eine Erhöhung der Schaltqualität nach sich ziehen kann.

Außerdem können mittels einer Reduzierung oder Vermeidung einer Änderung der Wirkrichtung des Drehmoments und/oder eines Stick-Slip-Effekts an einem Schaltelement durch die Anwendung eines solchen Verfahrens unerwünschte Auswirkungen, wie beispielsweise Last- und/oder Anlagewechsel an Zahnflanken von Zahnrädern, Drehmomentspitzen und/oder Drehmomentstöße, auf die übrigen Getriebekomponenten reduziert oder vermieden werden.

Unter im Wesentlichen nicht miteinander verbundenen Eingangs- und Ausgangsseiten einer, insbesondere im Leerlaufschaltzustand befindlichen, Schalteinrichtung kann in einer Ausführung auch eine Verbindung zu verstehen sein, bei der, insbesondere noch, ein Schleppmoment übertragen wird oder übertragbar ist, welches deutlich kleiner, insbesondere wenigstens um den Faktor 10 oder 20 kleiner, ist als ein im Lastschaltzustand übertragbares Drehmoment.

Eine reibschlüssige Schalteinrichtung kann in unterschiedlichen Ausführungen eine Schalteinrichtung sein, deren Lastschaltzustand mittels einer Trocken-, Misch-, und/oder Flüssigkeitsreibung zwischen wenigstens einem Reibpartner der Eingangsseite und wenigstens einem Reibpartner der Außenseite ermöglicht wird. Insbesondere sind im Sinne der Erfindung reibschlüssige Schalteinrichtungen mit wenigstens einem Reibrad, wenigstens einer Bremsbacke, wenigstens einer Bremsscheibe und/oder einer elektrorheologischen Flüssigkeit, vorzugsweise Reibradkupplungen oder Gehäusebremsen, vorgesehen.

Eine Eingangsseite einer Schalteinrichtung kann in einer Ausführung diejenige Seite der Schalteinrichtung sein, von welcher insbesondere in einem häufig auftretenden Betriebszustand ein Drehmoment auf die andere Seite, insbesondere die Ausgangsseite, der Schalteinrichtung übertragen wird. Allerdings kann in dieser Ausführung in bestimmten Betriebszuständen des Schaltgetriebes auch vorgesehen sein, dass ein Drehmoment von der Ausgangsseite zu der Eingangsseite übertragen wird.

Ein Schlupfwert ist in einer Ausführung der Erfindung derart definiert, dass er bei einer Drehzahldifferenz von Null zwischen einer Eingangsseite und einer Ausgangsseite einer Schalteinrichtung ebenfalls einen Wert von Null aufweist. Bei einem Nulldurchgang des Schlupfwerts (entspricht in einer Ausführung einer Schlupfumkehr) ändert sich in einer Ausführung der Erfindung die relative Rotationsrichtung der Eingangsseite und der Ausgangsseite der Schalteinrichtung zu einander, wobei der Schlupfwert insbesondere in der einen relativen Rotationsrichtung ein anderes Vorzeichen aufweist als in der anderen relativen Rotationsrichtung stehen. Diese Bewegung kann bei einer Überführung der Schalteinrichtung von dem Leerlauf-Schaltzustand in den Last-Schaltzustand zueinander hin erfolgen; bei einer Überführung der Schalteinrichtung von dem Last-Schaltzustand in den Leerlauf-Schaltzustand voneinander weg.

Im Sinne der hier beschriebenen Ausführung der Erfindung ist "das Schalten" einer Schalteinrichtung vorzugsweise abgeschlossen, sobald diese Schaltbewegung abgeschlossen ist.

Unter einem Schaltvorgang kann in einer Ausführung der Erfindung ein Zeitraum zu verstehen sein, in welchem mehr als eine, insbesondere zwei, drei, vier oder mehrere, Schalteinrichtungen geschaltet werden, gegebenenfalls wenigstens zum Teil nacheinander und/oder gleichzeitig. Dieser Zeitraum kann auch Zeiträume nach der Schaltbewegung einer der Schalteinrichtung beinhalten, in welchen ein Schlupfwert nach der Überführung in dem Last Schaltzustand einem Wert von Null angenähert wird und/oder diesen erreicht.

Gemäß einer bevorzugten Ausführung des Verfahrens weist das Schaltgetriebe eine dritte Schalteinrichtung auf, die gleichzeitig mit der ersten Schalteinrichtung aus ihrem Leerlaufschaltzustand in ihren Lastschaltzustand oder umgekehrt geschaltet wird.

Dadurch kann in einer bevorzugten Ausführung ein Auftreten eines Stick-Slip-Effekts und/oder eine Änderung der Wirkrichtung des an der Schalteinrichtung anliegenden Drehmoments bezüglich eines Schaltvorgangs vermieden werden, an dem wenigstens drei Schalteinrichtungen beteiligt sind.

Gemäß einer bevorzugten Ausführung des Verfahrens wird die Schlupfumkehr zwischen der Eingangsseite und der Ausgangsseite der zweiten Schalteinrichtung mittels einer aktiven Drehmoment- und/oder Kraftquelle, insbesondere mittels eines Motors, aktuiert.

Dadurch kann in einer bevorzugten Ausführung die Schlupfumkehr schneller, genauer und/oder sicherer realisierbar sein. Falls in einer Ausführung zur Aktuierung der Schlupfumkehr ein Elektromotor oder elektro-mechanischer Energiewandler, insbesondere eines Hybridfahrzeugs verwendet wird, kann dadurch eine bereits vorhandene Drehmoment-Quelle verwendet werden, wodurch Vorteile in der Komplexitätsreduzierung, der Kostenreduzierung und/oder der Ressourceneinsparung realisierbar sein können.

Unter einer aktiven Drehmoment- und/oder Kraftquelle kann in einer Ausführung der Erfindung insbesondere ein Motor, vorzugsweise ein Verbrennungsmotor oder ein elektromechanischer Energiewandler bzw. eine Elektromaschine, zu verstehen sein. In einer Ausführung der Erfindung wird zum Aktuieren der Schlupfumkehr der Verbrennungsmotor und/oder die Elektromaschine eines Hybridfahrzeugs eingesetzt.

Gemäß einer bevorzugten Ausführung des Schaltgetriebes weist das Schaltgetriebe eine Steuereinrichtung auf, mittels der wenigstens eine, insbesondere alle, Schaltbewegungen wenigstens einer dieser, insbesondere aller, Schalteinrichtungen und/oder ein Schlupfwert wenigstens einer dieser, insbesondere der zweiten oder aller, Schalteinrichtungen gesteuert werden.

Dadurch kann in einer bevorzugten Ausführung die Schlupfumkehr schneller, genauer und/oder sicherer realisierbar sein.

Eine Steuereinrichtung kann in unterschiedlichen Ausführungen der Erfindung separat für das Schaltgetriebe und/oder integriert in eine Steuervorrichtung eines Kraftfahrzeuges ausgebildet sein.

Gemäß einer bevorzugten Ausführung des Verfahrens wird die Schaltbewegung und/oder der Schlupfwert wenigstens einer der, insbesondere der zweiten oder aller, Schalteinrichtungen in Abhängigkeit von einer Drehzahl, einem Drehmoment und/oder einem Schlupfwert dieser und/oder wenigstens einer, insbesondere alier, weiteren Schalteinrichtung gesteuert.

Dadurch kann in einer bevorzugten Ausführung das Verfahren besser auf andere, in einem Betriebszustand des Schaltgetriebes vorliegende, Betriebsparameter, wie beispielsweise die im vorherigen Absatz genannten abgestimmt werden.

Die zu dem vorstehend beschriebenen Aspekt der Erfindung und den zugehörigen Weiterbildungen des Verfahrens offenbarten Merkmale gelten auch für die nachstehend beschriebenen Aspekte der Erfindung und die zugehörigen Weiterbildungen des Schaltgetriebes, des Antriebsstranges bzw. des Kraftfahrzeuges entsprechend. Umgekehrt gelten die zu den nachstehend beschriebenen Aspekten der Erfindung und den zugehörigen Weiterbildungen des Schaltgetriebes, des Antriebsstranges bzw. des Kraftfahrzeuges offenbarten Merkmale auch für den vorstehend beschriebenen Aspekt der Erfindung und die zugehörigen Weiterbildungen des Verfahrens entsprechend.

Das erfindungsgemäße Schaltgetriebe weist auf:
- wenigstens zwei, insbesondere wenigstens drei, reibschlüssige Schalteinrichtungen mit jeweils einer Eingangsseite, einer Ausgangsseite und wenigstens einem Schaltsteller;
- eine Schlupfstelleinrichtung zur Beeinflussung eines Schlupfwertes, der durch eine Differenz der Drehzahl der Eingangsseite und der Drehzahl der Ausgangsseite definierbar ist;
- eine Steuereinrichtung zur Steuerung der Schlupfeinstelleinrichtung und insbesondere wenigstens eines Schaltstellers.

Die Steuereinrichtung ist eingerichtet, eine Schlupfumkehr zwischen der Eingangsseite und der Ausgangsseite wenigstens einer der Schalteinrichtungen mittels einer aktiven Drehmoment- und/oder Kraftquelle, insbesondere der zweiten Schalteinrichtung, zu steuern.

In einer bevorzugten Ausführung ist kein Schaltsteller ein Teil der Schlupfstelleinrichtung. In einer anderen Ausführung weist die Schlupfstelleinrichtung neben wenigstens einem Schaltsteller auch wenigstens eine schlupfstellende Einrichtung auf, die kein Schaltsteller ist.

Dadurch kann in einer bevorzugten Ausführung ein unerwünschtes Betriebsverhalten zumindest eines der Schaltelemente, insbesondere des zweiten Schaltelements, reduziert oder vermieden werden. Insbesondere kann eine Änderung der Wirkrichtung des Drehmoments an wenigstens einem, insbesondere dem zweiten, Schaltelement reduziert oder vermieden werden.

Mit der Änderung der Wirkrichtung des Drehmoments oder unabhängig davon kann dadurch das Auftreten eines Stick-Slip-Effekts in diesem Schaltelement bzw. diesen Schaltelementen reduziert oder vermieden werden, was eine Erhöhung der Schaltqualität nach sich ziehen kann.

Außerdem können durch eine Reduzierung oder Vermeidung einer Änderung der Wirkrichtung des Drehmoments und/oder eines Stick-Slip-Effekts an einem Schaltelement unerwünschte Auswirkungen, wie beispielsweise Last- und/oder Anlagewechsel an Zahnflanken von Zahnrädern, Drehmomentspitzen und/oder Drehmomentstöße, auf die übrigen Getriebekomponenten reduziert oder vermieden werden.

Die Begriffe "Schaltsteller" und "Stellelement" können vorliegend synonym verwendbar sein.

Die Schlupfstelleinrichtung kann in einer Ausführung wenigstens eine Drehmoment-Quelle, insbesondere eines Kraftfahrzeugs, als schlupfstellendes bzw. - beeinflussendes Element aufweisen.

Gemäß einer bevorzugten Ausführung des Schaltgetriebes ist wenigstens eine der Schalteinrichtungen als Bremse, insbesondere Reibbremse, und/oder wenigstens eine der Schalteinrichtungen als Kupplung, insbesondere Reibkupplung, ausgebildet.

Dadurch kann es in einer bevorzugten Ausführung möglich sein, verschiedene Getriebetypen, welche sich insbesondere durch eine unterschiedliche Gestaltung der Schalteinrichtungen unterscheiden, mit einer Schlupfumkehr und den damit verbundenen Vorteilen zu betreiben.

Gemäß einer bevorzugten Ausführung des Schaltgetriebes weist das Schaltgetriebe ein Getriebegehäuse auf, an welchem wenigstens eine, als Bremse ausgebildete, Schalteinrichtung mit ihrer Eingangsseite oder Ausgangsseite drehfest angeordnet ist.

Gemäß einer bevorzugten Ausführung des Schaltgetriebes weist das Schaltgetriebe wenigstens eine, insbesondere zwei oder drei, Umlaufgetriebeeinrichtungen auf, welche insbesondere mittels wenigstens einer der Schalteinrichtungen in ihren Betriebsverhalten, insbesondere in ihrer Drehzahlübersetzung, beeinflussbar sind.

Dadurch kann es in einer bevorzugten Ausführung möglich sein, verschiedene Getriebetypen, welche sich insbesondere durch eine unterschiedliche Anzahl und/oder Konfiguration der Umlaufgetriebeeinrichtungen unterscheiden, mit einer Schlupfumkehr und den damit verbundenen Vorteilen zu betreiben.

Unter einer Drehzahlübersetzung kann in einer Ausführung der Erfindung ein Verhältnis oder eine Differenz von wenigstens einer Eingangsdrehzahl des Schaltgetriebes oder einer der Schalteinrichtung und wenigstens einer Ausgangsdrehzahl des Schaltgetriebes oder einer dieser Schalteinrichtung zu verstehen sein.

Gemäß einem Aspekt der Erfindung wird ein Antriebsstrang, insbesondere für ein Kraftfahrzeug mit einem Hybridantrieb, mit einem Schaltgetriebe gemäß einer der vorbeschriebenen Ausführungen vorgeschlagen.

Der Antriebsstrang weist, insbesondere zusätzlich zu dem Schaltgetriebe, auf:
- einen mit dem Schaltgetriebe zur Drehmomentübertragung koppelbaren elektromechanischen Energiewandler,
- einen mit dem Schaltgetriebe zur Drehmomentübertragung koppelbaren Verbrennungsmotor, und
- eine mit dem Schaltgetriebe zur Drehmomentübertragung koppelbare Abtriebsschnittstelle zu wenigstens einer Rad/Reifenkombination des Kraftfahrzeuges.

Der elektromechanische Energiewandler und/oder der Verbrennungsmotor sind eingerichtet, eine Schlupfumkehr zwischen der Eingangsseite und der Ausgangsseite wenigstens einer der, insbesondere der zweiten, Schalteinrichtungen zu aktuieren.

Dadurch kann in einer bevorzugten Ausführung ein Hybridfahrzeug mit einem Schaltgetriebe mit Schlupfumkehr betrieben werden. Durch eine Aktuierung der Schlupfumkehr mittels wenigstens einer der Drehmomentquellen, insbesondere dem Verbrennungsmotor und/oder dem elektromechanischen Energiewandler, des Hybridfahrzeugs kann ein ressourcensparender Betrieb des Antriebsstrangs realisierbar sein.

Gemäß einer bevorzugten Ausführung des Antriebsstrangs ist jeweils wenigstens eine der Schalteinrichtungen eingerichtet,
- den Verbrennungsmotor mit dem Schaltgetriebe zur Drehmomentübertragung zu koppeln,
- den elektromechanischen Energiewandler mit dem Schaltgetriebe zur Drehmomentübertragung zu koppeln, und/oder
- wenigstens eine Rad/Reifenkombination des Kraftfahrzeugs mit dem Abtrieb, insbesondere der Abtriebsschnittstelle, vorzugsweise einem Abtriebsritzel, des Schaltgetriebes zur Drehmomentübertragung zu koppeln.

Dadurch kann es in einer bevorzugten Ausführung möglich sein, verschiedene Getriebetypen, welche sich insbesondere durch eine unterschiedliche Anordnung der Schalteinrichtungen und/oder unterschiedlichen Drehzahlübersetzungen unterscheiden, mit einer Schlupfumkehr zu betreiben.

Gemäß einem Aspekt der Erfindung wird ein Kraftfahrzeug mit einem Schaltgetriebe bzw. Antriebsstrang gemäß einer der vorbeschriebenen Ausführungen vorgeschlagen.

Erfindungsgemäß können auch mehrere der oben beschriebenen Weiterbildungen der Erfindung - soweit dies technisch möglich ist - beliebig miteinander kombiniert werden.

Beispielhafte Ausführungen des Verfahrens und/oder des Schaltgetriebes ergeben sich aus den nachfolgenden Beschreibungen in Zusammenhang mit den Figuren, welche im Einzelnen - wenigstens teilweise schematisiert - zeigen:
- Fig. 1:: einen Antriebsstrang mit einem Schaltgetriebe gemäß einer Ausführung der Erfindung in einem Prinzipschaltbild;
- Fig. 2a:: eine zeitliche Entwicklung von anliegenden Drehmomenten an mehreren Schalteinrichtungen eines nach einer Ausführung der Erfindung ausgebildeten und geschalteten Schaltgetriebes in einem Drehmoment-Zeit-Diagramm; und
- Fig. 2b:: eine zeitliche Entwicklung von Schlupfwerten mehrerer Schalteinrichtungen eines nach einer Ausführung der Erfindung ausgebildeten und geschalteten Schaltgetriebes in einem Schlupfwert-Zeit-Diagramm.

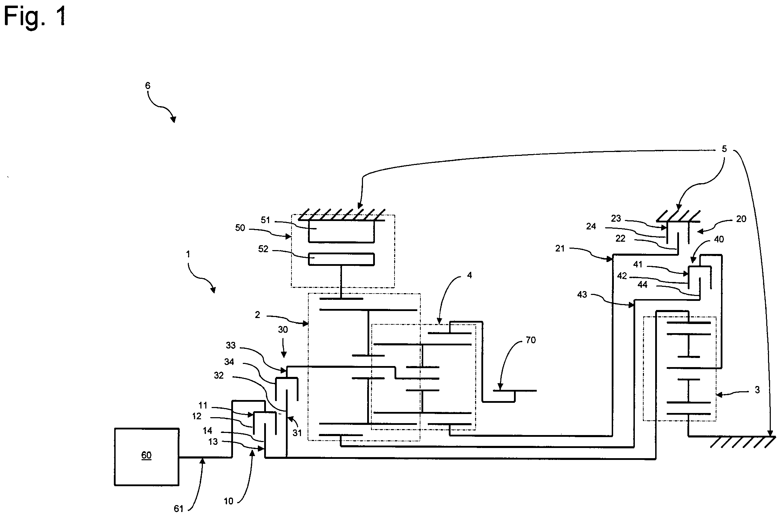

Fig. 1 zeigt einen Antriebsstrang 6 eines Schaltgetriebes 1 gemäß einer Ausführung der Erfindung in einem Prinzipschaltbild. Der in diesem Ausführungsbeispiel dargestellte Antriebsstrang 6 ist der Antriebsstrang eines Hybrid-Kraftfahrzeugs mit einem Verbrennungsmotor 60 und einem als Elektromaschine bezeichneten elektromechanischen Energiewandler 50. Mittels des Schaltgetriebes 1 sind Drehmomente von dem Verbrennungsmotor 60 und/oder der Elektromaschine 50 an das Abtriebsritzel 70 übertragbar, wobei das Abtriebsritzel 70 mit den antreibbaren Rädern des Hybridfahrzeuges verbindbar bzw. verbunden ist.

Umgekehrt kann auch ein Drehmoment von dem Abtriebsritzel 70 an den Verbrennungsmotor 60 und/oder die Elektromaschine 50 übertragen werden, insbesondere im Sinne eines Schleppmomentbetriebs des Verbrennungsmotors 60 und/oder zur Energie-Rekuperation mittels der Elektromaschine 50.

Das Schaltgetriebe 1 weist in dieser Ausführung eine erste Schalteinrichtung 10, eine zweite Schalteinrichtung 20, eine dritte Schalteinrichtung 30 und eine vierte Schalteinrichtung 40 auf.

Durch unterschiedliche Schaltstellungen der Schalteinrichtungen 10, 20, 30 und/oder 40 können mittels der Elektromaschinen-Umlaufgetriebestufe 2, der Verbrennungsmotor-Umlaufgetriebestufe 3 und/oder der Abtriebs-Umlaufgetriebestufe 4 unterschiedliche Drehmoment-Übersetzungen zwischen dem Verbrennungsmotor 60, der Elektromaschine 50 und/oder dem Abtriebsritzel 70 schaltbar sein bzw. geschaltet werden.

Mittels der ersten Schalteinrichtung 10 kann die Ausgangswelle 61 des Verbrennungsmotors 60 mit dem Hohlrad der Verbrennungsmotor-Umlaufgetriebestufe 3 drehfest verbunden werden. Dazu werden die Reibpartner 11 und 13 der ersten Schalteinrichtung 10 mittels - hier nicht dargestellten - Stellelementen in reibschlüssigen Kontakt gebracht.

Das Sonnenrad der Verbrennungsmotor-Umlaufgetriebestufe 3 ist drehfest mit dem Getriebegehäuse verbunden, die Planeten der Verbrennungsmotor-Umlaufgetriebestufe 3 sind mit der Eingangsseite 41 der vierten Schalteinrichtung 40 drehfest verbunden.

Die Ausgangsseite 43 der vierten Schalteinrichtung 40 ist drehfest mit dem Sonnenrad der Elektromaschinen-Umlaufgetriebestufe 2 verbunden und/oder als solches ausgebildet. Dadurch kann mittels der vierten Schalteinrichtung 40 die Verbrennungsmotor-Umlaufgetriebestufe 3 drehfest mit der Elektromaschinen-Umlaufgetriebestufe 2 verbunden werden. Dazu werden die Reibpartner 42 und 44 der vierten Schalteinrichtung 40 mittels - hier nicht dargestellten - Stellelementen in reibschlüssigen Kontakt gebracht.

Das Hohlrad der Elektromaschinen-Umlaufgetriebestufe 2 ist drehfest mit dem Rotor 52 der Elektromaschine 50 verbunden, wobei der Rotor 52 radial innerhalb des an dem Getriebegehäuse 5 fest angeordneten Stators 51 angeordnet ist.

Der Planetenträger der Planeten der Elektromaschinen-Umlaufgetriebestufe 2 ist in dieser Ausführung fest, vorzugsweise integral, mit dem Planetenträger der Planeten der Abtriebs-Umlaufgetriebestufe 4 verbunden, wobei an diesem Planetenträger auch die Ausgangsseite 33 der dritten Schalteinrichtung 30 angeordnet ist.

Die Eingangsseite 31 der dritten Schalteinrichtung 30 ist drehfest mit der Ausgangsseite 13 der ersten Schalteinrichtung 10 verbunden. Dadurch kann mittels der dritten Schalteinrichtung 30 die Elektromaschinen-Umlaufgetriebestufe 2 und/oder die Abtriebs-Umlaufgetriebestufe 4, jeweils an ihrem Planetenträger, mit dem Hohlrad der Verbrennungsmotor-Umlaufgetriebestufe 3 verbunden werden. Dazu werden die Reibpartner 32 und 34 der dritten Schalteinrichtung 30 mittels - hier nicht dargestellten - Stellelementen in reibschlüssigen Kontakt gebracht.

Das Sonnenrad der Abtriebs-Umlaufgetriebestufe 4 ist drehfest mit der Eingangsseite 21 der zweiten Schalteinrichtung 20 verbunden. Die Ausgangsseite 23 der zweiten Schalteinrichtung 20 ist fest mit dem Getriebegehäuse 5 verbunden, so dass die zweite Schalteinrichtung 20 in diesem Ausführungsbeispiel als Bremse, insbesondere Gehäusebremse, am Getriebegehäuse ausgebildet ist.

Dadurch kann mittels der zweiten Schalteinrichtung 20 das Sonnenrad der Abtriebs-Umlaufgetriebestufe 4 am Getriebegehäuse festgelegt werden. Dazu werden die Reibpartner 22 und 24 der zweiten Schalteinrichtung 20 mittels - hier nicht dargestellten - Stellelementen in reibschlüssigen Kontakt gebracht.

Das Hohlrad der Abtriebs-Umlaufgetriebestufe 4 ist drehfest mit dem Abtriebsritzel 70 verbundenen, insbesondere integral mit diesem ausgebildet.

Durch das in diesem Ausführungsbeispiel verwendete Schaltgetriebe 1 wird ermöglicht, im Antriebsstrang 6 durch unterschiedliche Schaltungen des Schaltgetriebes 1 verschiedene Fahrsituationen und/oder Drehzahlübersetzungen abdecken zu können. In einem geschlossenen Schaltzustand der ersten Schalteinrichtung 10 kann beispielsweise Drehmoment von dem Verbrennungsmotor 60 und Drehmoment von der Elektromaschine 50 überlagert an das Abtriebsritzel 70 übertragen werden.

Je nach Schaltung der zweiten Schalteinrichtung 10, der dritten Schalteinrichtung 20 und/oder der vierten Schalteinrichtung 40, jeweils in einem geöffneten oder in einem geschlossenen Schaltzustand, sind unterschiedliche Drehzahl-Übersetzungsverhältnisse zwischen dem Verbrennungsmotor 60 und/oder der Elektromaschine 50 einerseits und dem Abtriebsritzel 70 andererseits realisierbar.

Bei einem rein elektrischen Fahrbetrieb bei geöffneter erster Schalteinrichtung 10 sind in der dargestellten Ausführung je nach Schaltung der zweiten Schalteinrichtung 10, der dritten Schalteinrichtung 20 und/oder der vierten Schalteinrichtung 40, jeweils in einem geöffneten oder in einem geschlossenen Schaltzustand, unterschiedliche Drehzahl-Übersetzungsverhältnisse zwischen der Elektromaschine 50 und dem Abtriebsritzel 70 realisierbar.

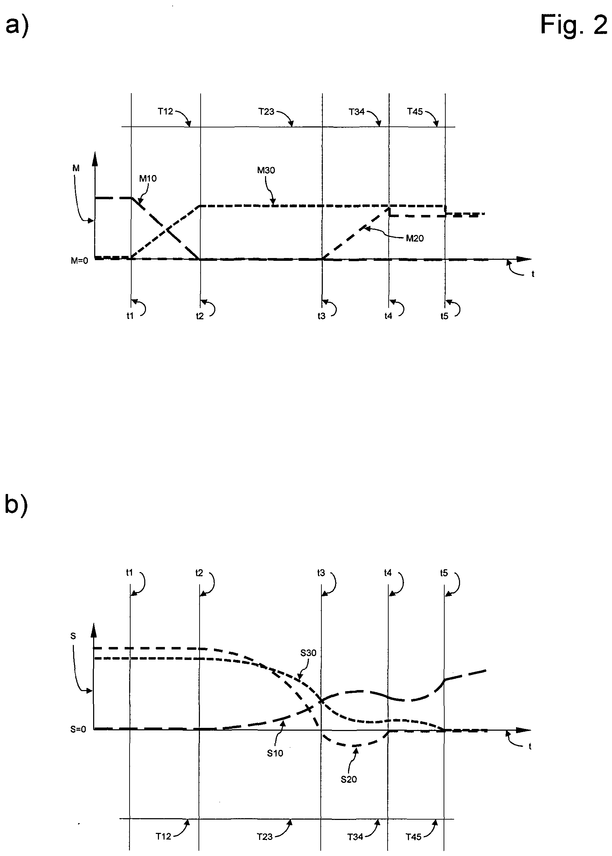

Fig. 2a zeigt eine zeitliche Entwicklung von, an mehreren, hier drei, Schalteinrichtungen 10, 20, 30, jeweils anliegenden Drehmomenten M10, M20, M30 eines nach einer Ausführung der Erfindung ausgebildeten und betriebenen, insbesondere geschalteten, Schaltgetriebes 1 in einem Drehmoment-Zeit-Diagramm.

In dem Diagramm ist die Entwicklung des an der ersten Schalteinrichtung 10 anliegenden Drehmoments M10 über die Zeit t aufgetragen. Analog sind die zeitlichen Entwicklungen des an der zweiten Schalteinrichtung 20 und der dritten Schalteinrichtung 30 anliegenden Drehmoments M20 bzw. M30 in dem Diagramm eingetragen. Die horizontale Position der Zeitachse entspricht in dem Diagramm einem Drehmoment M von im Wesentlichen Null. Soweit an der Zeitachse mehrere Drehmomentverläufe übereinander eingetragen sind (beispielsweise M30 und M20 im Bereich vor t1), sind alle diese Drehmomente im Wesentlichen gleich Null und nur für ein besseres Verständnis in dieser Weise eingetragen.

In Figur 2a ist ein Schaltvorgang des in Figur 1 dargestellten Schaltgetriebes 1 wiedergegeben, bei welchem die Schalteinrichtungen 10, 20 und 30 geschaltet werden, während die vierte Schalteinrichtung 40 in ihrem Lastschaltzustand verbleibt.

Dabei wird die erste Schalteinrichtung 10 aus ihrem Lastschaltzustand in ihren Leerlaufschaltzustand, die dritte Schalteinrichtung 30 aus ihrem Leerlaufschaltzustand in ihren Lastschaltzustand und die zweite Schalteinrichtung 30 aus Ihrem Lastschaltzustand in ihren Leerlaufschaltzustand überführt.

Der gesamte Schaltvorgang findet dabei in mehreren aufeinanderfolgenden Schaltphasen T12, T23, T34 und T45 statt, welche durch Schaltphasenänderungszeitpunkte t1 bis t5 zeitlich voneinander getrennt sind.

Zum Zeitpunkt t1 werden, hier im Wesentlichen gleichzeitig, die erste Schalteinrichtung 10 und die dritte Schalteinrichtung 30 geschaltet, wobei mittels nicht dargestellten Stellelementen die drehmomentübertragende Verbindung zwischen den Reibpartnern 12 und 14 der ersten Schalteinrichtung 10 gelöst wird, während mittels ebenfalls nicht dargestellten Stellelementen eine drehmomentübertragende Verbindung zwischen den Reibpartnern 32 und 42 der dritten Stelleinrichtung 30 hergestellt wird.

In der Schaltphase T12 erfolgt dementsprechend nach und nach, hier insbesondere im Wesentlichen linear, eine Übergabe des anliegenden Drehmoments M10 von der ersten Schalteinrichtung 10 auf die dritte Schalteinrichtung 30, wo sich entsprechend das Drehmoment M30 aufbaut.

Sobald die Drehmomentübergabe abgeschlossen ist, endet zum Zeitpunkt t2 die Drehmomentübergabe-Schaltphase T12. Der Schaltvorgang des Schaltgetriebes 1 tritt damit in die Vorsynchronisations-Schaltphase T23 ein, in welcher keine der Schalteinrichtungen 10, 20 und/oder 30 in einen anderen Schaltzustand überführt wird.

In der Vorsynchronisations-Schaltphase T23 wird die Schlupfumkehr der zweiten Schalteinrichtung 20, hier mittels der Elektromaschine 50, aktuiert (siehe Figur 2b). In der in den Figuren beschriebenen Ausführung des Schaltgetriebes bzw. des Verfahrens wird im Rahmen des Schaltvorgangs in dieser Schaltphase T23 keine der Schalteinrichtungen, insbesondere nicht die zweite Schalteinrichtung, geschaltet. Die an den Schalteinrichtungen 10, 20 und 30 anliegenden Drehmomente M10, M20 bzw. M30 bleiben somit in der Vorsynchronisations-Schaltphase T23 im Wesentlichen unverändert.

Sobald der Schlupfwert S20 der zweiten Schalteinrichtung 20, in der Darstellung der Figur 2 zum Zeitpunkt t3, insbesondere mittels der Aktuierung durch die Elektromaschine 50, einen Nulldurchgang erreicht hat und im Sinne einer Schlupfumkehr einen Schlupfwert S20 mit einem anderen Vorzeichen annimmt (sprich: der Reibpartner 22 der Eingangsseite 21 und der Reibpartnern 24 der Ausgangsseite 23 der zweiten Schalteinrichtung 20 rotieren zueinander in eine andere Drehrichtung als zuvor), werden mittels der Steuereinrichtung die Stellelemente der zweiten Schalteinrichtung 20 aktiviert.

Während diese Stellelemente die zweite Steuereinrichtung 20 innerhalb einer ersten Synchronisations-Schaltphase T34 schließen, liegt an dieser ein sich mit der Zeit, hier linear, verstärkendes dynamisches Drehmoment M20 an.

Dieses dynamische Drehmoment M20 erreicht sein Maximum zum Zeitpunkt t4, zu welchem der Schlupfwert S20 durch die Anpassung der Drehzahlen der Eingangsseite 21 und der Ausgangsseite 23 aneinander beim Schließen der zweiten Schalteinrichtung 20 seinen Nullpunkt zum Betrieb in dem Lastschaltzustand der zweiten Schalteinrichtung 20 erreicht.

Zum Zeitpunkt t4 wird, insbesondere aufgrund des Erreichens des Nullpunkts des Schlupfwerts S20, das an der zweiten Schalteinrichtung anliegende dynamische Drehmoment M20 in ein statisches Drehmoment M20 überführt.

Durch die zuvor in der Schaltphase T23 erfolgte bzw. aktuierte Schlupfumkehr der Schalteinrichtung 20 unterscheiden sich das dynamische Drehmoment M20 und das statische Drehmoment M20 jedoch lediglich, insbesondere geringfügig, im Betrag des anliegenden Drehmoments; jedoch nicht in der Wirkrichtung.

Daher tritt bei der in den Figuren beschriebenen Ausführung insbesondere kein oder ein geringer ausgebildeter Stick-Slip-Effekt in der zweiten Schalteinrichtung 20 auf.
In einer Ausführung kann die Differenz des Betrages zwischen dem dynamischen und dem statischen Drehmoment M20 durch den Übergang von einer Gleitreibung in eine Haftreibung erklärbar sein.

Vom Zeitpunkt t4 an erfolgt in einer zweiten Synchronisationsschaltphase T45 ein Erreichen eines Schlupfwertes S30 von Null an der dritten Schalteinrichtung 30. Wenn dieser, hier zum Zeitpunkt t5, erreicht ist, erfolgt eine Überführung des an der dritten Schalteinrichtung 30 anliegenden dynamischen Drehmoments M30 in ein statisches Drehmoment M30, das mit der gleichen Wirkrichtung einen, insbesondere geringfügig, kleineren Betrag aufweist.

Fig. 2b zeigt eine zeitliche Entwicklung von Schlupfwerten S10, S20 bzw. S30 mehrerer Schalteinrichtungen 10, 20 und 30 eines nach einer Ausführung der Erfindung ausgebildeten und, betriebenen, insbesondere geschalteten, Schaltgetriebes 1 in einem Schlupfwert-Zeit-Diagramm. Die in der Figur 2b dargestellten Schaltphasenänderungszeitpunkte t1 bis t5 und Schaltphasen T12 bis T45 entsprechend den in der Figur 2a dargestellten Schaltphasenänderungszeitpunkte t1 bis t5 und Schaltphasen T12 bis T45. Die horizontale Position der Zeitachse entspricht in dem Diagramm einem Schlupfwert S von im Wesentlichen Null. Soweit an der Zeitachse mehrere Schlupfwertverläufe übereinander eingetragen sind (beispielsweise S30 und S20 im Bereich nach t5), sind alle diese Schlupfwerte im Wesentlichen gleich Null und nur für ein besseres Verständnis in dieser Weise eingetragen.

Die Änderung des Schlupfwertes S20 der zweiten Schalteinrichtung 20 ist in dieser Ausführung wenigstens in Teilen der Vorsynchronisations-Schaltphase T23 und wenigstens in Teilen der ersten Synchronisations-Schaltphase T34 durch die Elektromaschine 50 aktuiert, wodurch insbesondere der Nulldurchgang des Schlupfwertes S20 im Zeitpunkt t3 erreicht wird.

Die der Figur 2b zu entnehmende Verzögerung der Steigerung des Schlupfwertes S10 der ersten Schalteinrichtung 10 und der Reduzierung des Schlupfwertes S30 der dritten Schalteinrichtung 30 (in beiden Fällen siehe Schaltphasen T 34 und T 45) kann in einer Ausführungsform insbesondere auf einen Einfluss der Aktuierung des Schlupfwertes S20 der zweiten Schalteinrichtung 20 zurückgeführt werden. In diesem Fall ergeben sich die entsprechenden Verzögerungen insbesondere durch die Konfiguration des Schaltgetriebes 1 mit mehreren Umlaufgetriebestufen 2, 3 und 4.

### Bezugszeichenliste

- 1: Schaltgetriebe
- 2: Elektromaschinen-Umlaufgetriebestufe
- 3: Verbrennungsmotor-Umlaufgetriebestufe
- 4: Abtriebs-Umlaufgetriebestufe
- 5: Getriebegehäuse
- 6: Antriebsstrang

- 10: erste Schalteinrichtung
- 11: Eingangsseite
- 12: Reibpartner
- 13: Ausgangsseite
- 14: Reibpartner

- 20: zweite Schalteinrichtung
- 21: Eingangsseite
- 22: Reibpartner
- 23: Ausgangsseite
- 24: Reibpartner

- 30: dritte Schalteinrichtung
- 31: Eingangsseite
- 32: Reibpartner
- 33: Ausgangsseite
- 34: Reibpartner

- 40: vierte Schalteinrichtung
- 41: Eingangsseite
- 42: Reibpartner
- 43: Ausgangsseite
- 44: Reibpartner

- 50: Elektromaschine (elektromechanischer Energiewandler)
- 51: Stator
- 52: Rotor

- 60: Verbrennungsmotor
- 61: Welle

- 70: Abtriebsritzel

- Sx: Schlupf zwischen der Eingangs- und der Ausgangsseite der Schalteinrichtung x
- Mx: Drehmoment an der Schalteinrichtung x
- t: Zeitachse des Schaltvorgangs
- tx: Schaltphasen-Änderungszeitpunkte
- Txx: Schaltphase

## Patentansprüche

1. Verfahren zum Betrieb, insbesondere zum Schalten, eines Schaltgetriebes (1), insbesondere für Kraftfahrzeuge, das wenigstens zwei reibschlüssige Schalteinrichtungen (10,20,30,40) mit jeweils einer Eingangsseite (11,21,31,41) und einer Ausgangsseite (13,23,33,43) aufweist, wobei
- anhand einer Differenz einer Drehzahl der Eingangsseite (11,21,31,41) und einer Drehzahl der Ausgangsseite (13,23,33,43) zueinander ein Schlupfwert (S) definierbar ist, und wobei
- jede dieser Schalteinrichtungen (10,20,30,40) wenigstens einen Lastschaltzustand, in welchem die Eingangsseite (11,21,31,41) und die Ausgangsseite (13,23,33,43) miteinander zur Drehmomentübertragung verbunden sind, und einen Leerlaufschaltzustand, in welchem die Eingangsseite (11,21,31,41) und die Ausgangsseite (13,23,33,43) im Wesentlichen nicht miteinander verbunden sind, aufweist, und wobei
- eine erste von diesen Schalteinrichtungen (10) aus ihrem Lastschaltzustand in ihren Leerlaufschaltzustand oder umgekehrt geschaltet wird, und
- eine zweite von diesen Schalteinrichtungen (20) in Abhängigkeit von ihrem Schlupfwert (S20) erst dann aus ihrem Leerlaufschaltzustand in ihren Lastschaltzustand oder umgekehrt geschaltet wird, wenn dieser Schlupfwert (S20) nach einem Nulldurchgang, insbesondere im Sinne einer Schlupfumkehr, ein anderes Vorzeichen aufweist als zwischen dem Schalten der ersten Schalteinrichtung (10) und dem Nulldurchgang.

2. Verfahren gemäß Anspruch 1, wobei
das Schaltgetriebe (1) eine dritte Schalteinrichtung (30) aufweist, die gleichzeitig mit der ersten Schalteinrichtung (10) aus ihrem Leerlaufschaltzustand in ihren Lastschaltzustand oder umgekehrt geschaltet wird.

3. Verfahren gemäß einem der vorherigen Ansprüche, wobei die Schlupfumkehr zwischen der Eingangsseite (21) und der Ausgangsseite (23) der zweiten Schalteinrichtung (20) mittels einer aktiven Drehmoment- und/oder Kraftquelle (50,60), insbesondere mittels eines Motors, aktuiert wird.

4. Verfahren gemäß dem vorherigen Anspruch, wobei
die Schaltbewegung und/oder der Schlupfwert (S) wenigstens einer der Schalteinrichtungen (10,20,30,40) in Abhängigkeit von einer Drehzahl, einem Drehmoment (M) und/oder einem Schlupfwert (S) dieser und/oder wenigstens einer weiteren Schalteinrichtung (10,20,30,40) gesteuert wird.

5. Schaltgetriebe (1), insbesondere für ein Kraftfahrzeug, aufweisend
- wenigstens zwei, insbesondere wenigstens drei, reibschlüssige Schalteinrichtungen (10,20,30,40) mit jeweils einer Eingangsseite (11,21,31,41), einer Ausgangsseite (13,23,33,43) und wenigstens einem Schaltsteller,
- eine Schlupfstelleinrichtung zur Beeinflussung eines Schlupfwertes (S), der durch eine Differenz der Drehzahl der Eingangsseite (11,21,31,41) und der Drehzahl der Ausgangsseite (13,23,33,43) definierbar ist,
- eine Steuereinrichtung zur Steuerung der Schlupfeinstelleinrichtung und insbesondere wenigstens eines Schaltstellers,
**dadurch gekennzeichnet, dass**
die Steuereinrichtung eingerichtet ist, einen Nulldurchgang des Schlupfwerts (S) mit Änderung der relativen Rotationsrichtung zwischen der Eingangsseite (11,21,31,41) und der Ausgangsseite (13,23,33,43) wenigstens einer der Schalteinrichtungen (10,20,30,40) mittels einer aktiven Drehmoment- und/oder Kraftquelle (50,60), insbesondere der zweiten Schalteinrichtung (20), im Sinne einer Schlupfumkehr zu steuern.

6. Schaltgetriebe gemäß Anspruch 5, wobei das Schaltgetriebe (1) eine Steuereinrichtung aufweist, mittels der wenigstens eine Schaltbewegung wenigstens einer dieser Schalteinrichtungen (10,20,30,40) und/oder ein Schlupfwert (S10,S20,S30,S40) wenigstens einer dieser Schalteinrichtungen (10,20,30,40) gesteuert werden.

7. Schaltgetriebe (1) gemäß Anspruch 5 oder 6, **dadurch gekennzeichnet, dass** wenigstens eine der Schalteinrichtungen (10,20,30,40) als Bremse und/oder wenigstens eine der Schalteinrichtungen (10,20,30,40) als Kupplung ausgebildet ist.

8. Schaltgetriebe (1) gemäß Anspruch 5 bis 7, **dadurch gekennzeichnet, dass** das Schaltgetriebe (1) ein Getriebegehäuse (5) aufweist, an welchem wenigstens eine, als Bremse ausgebildete, Schalteinrichtung (20) mit ihrer Eingangsseite (21) oder Ausgangsseite (23) drehfest angeordnet ist.

9. Schaltgetriebe (1) gemäß einem der Ansprüche 5 bis 8, **dadurch gekennzeichnet, dass** das Schaltgetriebe (1) wenigstens eine, insbesondere zwei oder drei, Umlaufgetriebeeinrichtungen (2,3,4) aufweist, welche insbesondere mittels wenigstens einer der Schalteinrichtungen (10,20,30,40) in ihren Betriebsverhalten, insbesondere in ihrer Drehzahlübersetzung, beeinflussbar sind.

10. Antriebsstrang (6), insbesondere für ein Kraftfahrzeug mit einem Hybridantrieb, mit einem Schaltgetriebe (1) gemäß einem der Ansprüche 5 bis 9, wobei der Antriebsstrang (6) zusätzlich aufweist
- einen mit dem Schaltgetriebe (1) zur Drehmomentübertragung koppelbaren elektromechanischen Energiewandler (50),
- einen mit dem Schaltgetriebe (1) zur Drehmomentübertragung koppelbaren Verbrennungsmotor (60), und
- eine mit dem Schaltgetriebe (1) zur Drehmomentübertragung koppelbare Abtriebsschnittstelle (70) zu wenigstens einer Rad/Reifenkombination des Kraftfahrzeuges
**dadurch gekennzeichnet, dass**
der elektromechanische Energiewandler (50) und/oder der Verbrennungsmotor (60) eingerichtet sind, eine Schlupfumkehr zwischen der Eingangsseite (21) und der Ausgangsseite (23) wenigstens einer der Schalteinrichtungen (20) zu aktuieren.

11. Antriebsstrang (6) gemäß Anspruch 10, **dadurch gekennzeichnet, dass** jeweils wenigstens eine der Schalteinrichtungen (10,20,30,40) eingerichtet ist,
- den Verbrennungsmotor (60) mit dem Schaltgetriebe (1) zur Drehmomentübertragung zu koppeln,
- den elektromechanischen Energiewandler (50) mit dem Schaltgetriebe (1) zur Drehmomentübertragung zu koppeln, und/oder
- wenigstens eine Rad/Reifenkombination des Kraftfahrzeugs mit der Abtriebsschnittstelle (70) des Schaltgetriebes (1) zur Drehmomentübertragung zu koppeln.

12. Kraftfahrzeug mit einem Antriebsstrang (6) gemäß Anspruch 10 oder 11.

13. Computerprogramm, welches Anweisungen aufweist, die, wenn sie von einer Steuereinrichtung eines Schaltgetriebes gemäß Anspruch 5 ausgeführt werden, ein Verfahren gemäß einem der Ansprüche 1 bis 4, ausführen.

14. Computer-lesbares Medium, auf welchem ein Computerprogramm gemäß Anspruch 13 abgespeichert ist.

## Claims

1. Method for operating, in particular shifting, of, in particular for motor vehicles, comprising at least two frictionally engaged switching mechanisms (10, 20, 30, 40) each having an input side (11, 21, 31, 41) and an output side (13, 23, 33, 43), wherein
- a slip value (S) is definable based on a difference of a rotational speed of the input side (11, 21, 31, 41) and a rotational speed of the output side (13, 23, 33, 43) to one another, and wherein
- each of these switching mechanisms (10, 20, 30, 40) comprises at least one power shift state, in which the input side (11, 21, 31, 41) and the output side (13, 23, 33, 43) are engaged with each other for torque transmission, and an idle switching state, in which the input side (11, 21, 31, 41) and the output side (13, 23, 33, 43) are essentially not engaged with each other, and wherein
- a first of these switching mechanisms (10) is shifted from its power shift state in its idle shift state or vice versa, and
- a second of these switching mechanisms (20) is shifted from its idle shift state to its power shift state or vice versa, depending on its slip value (S20), only when this slip value (S20) comprises a opposite algebraic sign after a zero crossing, in particular in the sense of a slip reversion, than between the shifting and the zero crossing of the first switching mechanism (10).

2. Method according to claim 1, wherein the gearbox (1) comprises a third switching mechanism (30) which is shifted from its idle shift state to its power shift state or vice versa, simultaneously with the first switching mechanism (10).

3. Method according to one of the preceding claims, wherein the slip reversion between the input side (21) and the output side (23) of the second switching mechanism (20) is actuated by means of an active torque and/or power source (50, 60), in particular by means of a motor.

4. Method according to the preceding claims, wherein the shifting motion and/or the slip value (S) of at least one of the switching mechanisms (10, 20, 30, 40) is controlled dependent on a rotational speed, a torque (M) and/or a slip value (S) thereof or of at least one further switching mechanism (10, 20, 30, 40).

5. Gearbox (1), in particular for a motor vehicle, comprising
- at least two, in particular at least three, frictionally engaged switching mechanisms (10, 20, 30, 40) each having an input side (11, 21, 31, 41), an output side (13, 23, 33, 34) and at least a shifting actuator,
- a slip control device for influencing a slip value (S), the slip value (S) being definable through a difference of the rotational speed of the input side (11, 21, 31, 41) and the rotational speed of the output side (13, 23, 33, 43),
- a control device for controlling the slip control device and in particular at least one switching actuator, **characterized in that** the control device is configured to control a zero crossing of the slip value (S) with alteration of the relative rotational direction between the input side (11, 21, 31, 41) and the output side (13, 23, 33, 43) of at least one switching mechanism (10, 20, 30, 40) by means of an active torque and/or power source (50, 60), in particular of the second switching mechanism (20), in the sense of a slip reversion.

6. Gearbox (1) according to claim 5, wherein the gearbox (1) comprises a control device, by means of which a shifting motion of at least one of these shifting mechanisms (10, 20, 30, 40) and/or a slip value (S10, S20, S30, S40) of at least one of these switching mechanisms (10, 20, 30, 40) is controlled.

7. Gearbox (1) according to claim 5 or 6, **characterized in that** at least one of the switching mechanisms (10, 20, 30, 40) is designed as a brake and/or at least one of the switching mechanisms (10, 20, 30, 40) is designed as clutch.

8. Gearbox (1) according to claims 5 to 7, **characterized in that** the gearbox (1) comprises a gearbox housing (5), at least one switching mechanism (20), which is designed as a brake, being non-rotatably arranged thereon with its input side (21) or its output side (23).

9. Gearbox (1) according to one of claims 5 to 8, **characterized in that** the gearbox (1) comprises at least one, in particular two or three epicyclic gear devices (2, 3, 4), in particular being influenceable in their operating behavior, in particular in their speed ratio, by means of at least one of the switching mechanisms (10, 20, 30, 40).

10. Powertrain (6), in particular for a motor vehicle with a hybrid drive, with a gearbox (1) according to one of claims 5 to 9, wherein the powertrain (6) additionally comprises
- an electromechanical energy converter (50) connectable to the gearbox (1) for torque transmission,
- a combustion engine (60) connectable to the gearbox (1) for torque transmission, and
- a drive interface (70) to at least one wheel/tire combination of the motor vehicle connectable to the gearbox for torque transmission, **characterized in that** the electromechanical energy converter (50) and/or the combustion engine (60) are configured to actuate a slip reversion between the input side (21) and the output side (23) of at least one of the switching mechanisms (20).

11. Powertrain (6) according to claim 10, **characterized in that** at least one of the switching mechanisms (10, 20, 30, 40) is configured to
- connecting the combustion engine (60) to the gearbox (1) for torque transmission,
- connecting the electromechanical energy converter (50) to the gearbox (1) for torque transmission, and/or
- connecting at least one wheel/tire combination of the motor vehicle to the driving interface (70) of the gearbox (1) for torque transmission.

12. Motor vehicle with a powertrain (6) according to claim 10 or 11.

13. Computer program, comprising instructions, which, if executed by a control device of a gearbox according to claim 5, execute a method according to one of claims 1 to 4.

14. Computer-readable medium, on which a computer program according to claim 13 is stored.

## Revendications

1. Procédé pour faire fonctionner, en particulier pour changer des vitesses sur une boîte de vitesses (1), en particulier pour des véhicules à moteur, qui présente au moins deux dispositifs de changement de vitesse (10, 20, 30, 40) à friction avec respectivement un côté d'entrée (11, 21, 31, 41) et un côté de sortie (13, 23, 33, 43), dans lequel
- une valeur de patinage (S) peut être définie à l'aide d'une différence entre une vitesse de rotation du côté d'entrée (11, 21, 31, 41) et une vitesse de rotation du côté de sortie (13, 23, 33, 43) l'une par rapport à l'autre, et dans lequel
- chacun des dispositifs de changement de vitesse (10, 20, 30, 40) présente au moins un état de changement de vitesse en charge, dans lequel le côté d'entrée (11, 21, 31, 41) et le côté de sortie (13, 23, 33, 43) sont reliés l'un à l'autre aux fins de la transmission de couple de rotation, et un état de changement de vitesse en marche à vide, dans lequel le côté d'entrée (11, 21, 31, 41) et le côté de sortie (13, 23, 33, 43) ne sont pas sensiblement reliés l'un à l'autre, et dans lequel
- un premier desdits dispositifs de changement de vitesse (10) est commuté depuis son état de changement de vitesse en charge dans son état de changement de vitesse en marche à vide, ou inversement, et
- un deuxième desdits dispositifs de changement de vitesse (20) est commuté en fonction de sa valeur de patinage (S20) seulement depuis son état de changement de vitesse en marche à vide dans son état de changement de vitesse en charge ou inversement quand ladite valeur de patinage (S20) présente, après un passage par zéro, en particulier au sens d'une inversion de patinage, un autre signe algébrique qu'entre le changement de vitesse du premier dispositif de changement de vitesse (10) et le passage par zéro.

2. Procédé selon la revendication 1, dans lequel
la boîte de vitesses (1) présente un troisième dispositif de changement de vitesse (30), qui est commuté, simultanément avec le premier dispositif de changement de vitesse (10), depuis sont état de changement de vitesse en marche à vide dans son état de changement de vitesse en charge ou inversement.

3. Procédé selon l'une quelconque des revendications précédentes, dans lequel l'inversion de patinage entre le côté d'entrée (21) et le côté de sortie (23) du deuxième dispositif de changement de vitesse (20) est actionnée au moyen d'une source de couple de rotation et/ou de force (50, 60) active, en particulier au moyen d'un moteur.

4. Procédé selon la revendication précédente, dans lequel le mouvement de changement de vitesse et/ou la valeur de patinage (S) d'au moins un des dispositifs de changement de vitesse (10, 20, 30, 40) est commandé/commandée en fonction d'une vitesse de rotation, d'un couple de rotation (M) et/ou d'une valeur de patinage (S) dudit et/ou d'au moins un autre dispositif de changement de vitesse (10, 20, 30, 40).

5. Boîte de vitesses (1), en particulier pour un véhicule à moteur, présentant
- au moins deux, en particulier au moins trois, dispositifs de changement de vitesse (10, 20, 30, 40) à friction avec respectivement un côté d'entrée (11, 21, 31, 41), un côté de sortie (13, 23, 33, 43) et au moins un actionneur de changement de vitesse,
- un dispositif de réglage de patinage servant à influencer une valeur de patinage (S), qui peut être définie par une différence entre la vitesse de rotation du côté d'entrée (11, 21, 31, 41) et la vitesse de rotation du côté de sortie (13,23,33,43)(,
- un dispositif de commande servant à commander le dispositif de réglage de patinage et en particulier au moins un actionneur de changement de vitesse, **caractérisée en ce que**
le dispositif de commande est mis au point pour commander un passage par zéro de la valeur de patinage (S) avec modification du sens de rotation relatif entre le côté d'entrée (11, 21, 31, 41) et le côté de sortie (13, 23, 33, 43) d'au moins un des dispositifs de changement de vitesse (10, 20, 30, 40) au moyen d'une source de couple de rotation et/ou de force (50, 60) active, en particulier du deuxième dispositif de changement de vitesse (20), au sens d'une inversion de patinage.

6. Boîte de vitesses selon la revendication 5, dans laquelle la boîte de vitesses (1) présente un dispositif de commande, au moyen duquel au moins un mouvement de changement de vitesse d'au moins un des dispositifs de changement de vitesse (10, 20, 30, 40) et/ou une valeur de patinage (S10 S20, S30, S40) d'au moins un des dispositifs de changement de vitesse (10, 20, 30, 40) sont commandés.

7. Boîte de vitesses (1) selon la revendication 5 ou 6, **caractérisée en ce qu'**au moins un des dispositifs de changement de vitesse (10, 20, 30, 40) est réalisé en tant que frein et/ou au moins un des dispositifs de changement de vitesse (10, 20, 30, 40) est réalisé en tant qu'embrayage.

8. Boîte de vitesses (1) selon la revendication 5 à 7, **caractérisée en ce que** la boîte de vitesses (1) présente un boîtier de boîte de vitesses (5), au niveau duquel est disposé de manière solidaire en rotation au moins un dispositif de changement de vitesse (20) réalisé en tant que frein par son côté d'entrée (21) ou côté de sortie (23).

9. Boîte de vitesses (1) selon l'une quelconque des revendications 5 à 8, **caractérisée en ce que** la boîte de vitesses (1) présente au moins un, en particulier deux ou trois, dispositifs d'engrenage planétaire (2, 3, 4), lesquels peuvent être influencés en particulier au moyen d'au moins un des dispositifs de changement de vitesse (10, 20, 30, 40) dans leur comportement de fonctionnement, en particulier dans leur démultiplication de vitesse de rotation.

10. Chaîne cinématique (6), en particulier pour un véhicule à moteur avec un entraînement hybride, avec une boîte de vitesses (1) selon l'une quelconque des revendications 5 à 9, dans laquelle la chaîne cinématique (6) présente en supplément
- un convertisseur d'énergie (50) électromécanique pouvant être couplé à la boîte de vitesses (1) aux fins de la transmission de couple de rotation,
- un moteur à combustion interne (60) pouvant être couplé à la boîte de vitesses (1) aux fins de la transmission de couple de rotation, et
- une interface de sortie (70), pouvant être couplée à la boîte de vitesses (1) aux fins de la transmission de couple de rotation, avec au moins une combinaison roue/pneu du véhicule à moteur,
**caractérisée en ce que**
le convertisseur d'énergie (50) électromécanique et/ou le moteur à combustion interne (60) sont mis au point pour actionner une inversion de patinage entre le côté d'entrée (21) et le côté de sortie (23) d'au moins un dispositif de changement de vitesse (20).

11. Chaîne cinématique (6) selon la revendication 10, **caractérisée en ce que** respectivement au moins un des dispositifs de changement de vitesse (10, 20, 30, 40) est mis au point
- pour coupler le moteur à combustion interne (60) à la boîte de vitesses (1) aux fins de la transmission de couple de rotation,
- pour coupler le convertisseur d'énergie (50) électromécanique à la boîte de vitesses (1) aux fins de la transmission de couple de rotation, et/ou
- pour coupler au moins une combinaison roue/pneumatique du véhicule à moteur à l'interface de sortie (70) de la boîte de vitesses (1) aux fins de la transmission de couple de rotation.

12. Véhicule à moteur avec une chaîne cinématique (6) selon la revendication 10 ou 11.

13. Programme informatique, lequel présente des instructions qui, quand elles sont exécutées par un dispositif de commande d'une boîte de vitesses selon la revendication 5, exécutent un procédé selon l'une des revendications 1 à 4.

14. Support lisible par ordinateur, sur lequel un programme informatique selon la revendication 13 est sauvegardé.
